(19) **Europäisches Patentamt**
**European Patent Office**
**Office européen des brevets**

(11) **EP 2 477 011 A1**

(12) **EUROPEAN PATENT APPLICATION**
published in accordance with Art. 153(4) EPC

(43) Date of publication:
**18.07.2012 Bulletin 2012/29**

(21) Application number: **09849178.0**

(22) Date of filing: **08.09.2009**

(51) Int Cl.:
*G01F 9/00* (2006.01)          *B60K 35/00* (2006.01)
*B60R 16/02* (2006.01)          *G08G 1/13* (2006.01)

(86) International application number:
**PCT/JP2009/065673**

(87) International publication number:
**WO 2011/030398 (17.03.2011 Gazette 2011/11)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicants:
• **Pioneer Corporation**
  **Kanagawa 212-0031 (JP)**
• **Pioneer System Technologies Corporation**
  **Sendai-shi, Miyagi 9810912 (JP)**

(72) Inventors:
• **KASHIO, Shota**
  **Kawagoe-shi**
  **Saitama 350-8555 (JP)**

• **SHIRAKAWA, Yuya**
  **Kanagawa 212-0031 (JP)**
• **SUZUKI, Masayoshi**
  **Kawagoe-shi**
  **Saitama 350-8555 (JP)**
• **SHIMAMURA, Tetsuro**
  **Tokyo 153-8654 (JP)**

(74) Representative: **Haley, Stephen**
  **Gill Jennings & Every LLP**
  **The Broadgate Tower**
  **20 Primrose Street**
  **London EC2A 2ES (GB)**

(54) **FUEL CONSUMPTION DISPLAY DEVICE, FUEL CONSUMPTION DISPLAY METHOD, AND FUEL CONSUMPTION DISPLAY PROGRAM**

(57)    A fuel efficiency display device is applied to a navigation device, for example, and it includes a past average fuel efficiency calculating unit, a present average fuel efficiency calculating unit, an average fuel efficiency comparison unit, and a display unit. The past average fuel efficiency calculating unit calculates an average fuel efficiency from a start time of use of the fuel efficiency display device to a finish time of a last driving operation as a past average fuel efficiency. The present average fuel efficiency calculating unit calculates an average fuel efficiency at constant time intervals or at constant intervals of running distance as a present average fuel efficiency since a start time of a present driving op-eration. The average fuel efficiency comparison unit makes a comparison between the present average fuel efficiency and the past average fuel efficiency. The display unit displays a proportion of a number of times that the present average fuel efficiency is more efficient than the past average fuel efficiency to a total number of the comparisons between the present average fuel efficiency and the past average fuel efficiency.

FIG. 2

**Description**

TECHNICAL FIELD

The present invention relates to a method of displaying the fuel efficiency.

BACKGROUND TECHNIQUE

Recently, in terms of ecology and improvement of the fuel efficiency, a method for informing the driver of the vehicle information such as fuel efficiency has been invented. For example, in Patent Reference-1, there is described a technique which makes the fuel efficiency meter display the deviation of the momentary fuel efficiency to the average fuel efficiency as the fuel efficiency information.
Patent Reference-1:
Japanese Patent Application Laid-open under No. 2007-298494

DISCLOSURE OF INVENTION

PROBLEM TO BE SOLVED BY THE INVENTION

According to the technique described in Patent Reference-1, the display on the fuel efficiency meter is performed by the oscillation of the indicator from the neutral position. However, the momentary fuel efficiency varies hard, and in response to the variation, the oscillation of the indicator also become hard. Therefore, it is difficult for the driver to recognize the fuel efficiency, and the driver can know only the evaluation of the momentary fuel efficiency. For these reasons, in the technique described in Patent Reference-1, the driver cannot know the evaluation of the fuel efficiency with respect to all the present driving operation.
The above is an example of the problem to be solved by the present invention. An object of the present invention is to provide a fuel efficiency display device capable of letting the user know the evaluation of the fuel efficiency in the entire present driving operation.

MEANS FOR SOLVING THE PROBLEM

The invention according to claim 1 is a fuel efficiency display device which displays an evaluation of a fuel efficiency of a vehicle, including: a past average fuel efficiency calculating unit which calculates, based on a driving record of the vehicle, an average fuel efficiency from a start time of use of the fuel efficiency display device to a finish time of last driving operation as a past average fuel efficiency; a present average fuel efficiency calculating unit which calculates an average fuel efficiency at constant time intervals or at constant intervals of running distance as a present average fuel efficiency since a start time of present driving operation; an average fuel efficiency comparison unit which makes a comparison between the present average fuel efficiency and the past average fuel efficiency; and a display unit which displays a proportion of a number of times that the present average fuel efficiency is more efficient than the past average fuel efficiency to a total number of the comparisons.
The invention according to claim 4 is a fuel efficiency display method executed by a fuel efficiency display device which displays an evaluation of a fuel efficiency of a vehicle, including: a past average fuel efficiency calculating process which calculates, based on a driving record of the vehicle, an average fuel efficiency from a start time of use of the fuel efficiency display device to a finish time of last driving operation as a past average fuel efficiency; a present average fuel efficiency calculating process which calculates an average fuel efficiency at intervals of a constant time or at intervals of a constant running distance as a present average fuel efficiency since a start time of present driving operation; an average fuel efficiency comparison process which makes a comparison between the present average fuel efficiency and the past average fuel efficiency; and a display process which displays a proportion of a number of times that the present average fuel efficiency is more efficient than the past average fuel efficiency to a total number of the comparisons.
The invention according to claim 5 is fuel efficiency display program executed by a fuel efficiency display device which displays an evaluation of a fuel efficiency of a vehicle, making the fuel efficiency display device function as: a past average fuel efficiency calculating unit which calculates, based on a driving record of the vehicle, an average fuel efficiency from a start time of use of the fuel efficiency display device to a finish time of last driving operation as a past average fuel efficiency; a present average fuel efficiency calculating unit which calculates an average fuel efficiency at intervals of a constant time or at intervals of a constant running distance as a present average fuel efficiency since a start time of present driving operation; an average fuel efficiency comparison unit which makes a comparison between the present average fuel efficiency and the past average fuel efficiency; and a display unit which displays a proportion of a number of times that the present average fuel efficiency is more efficient than the past average fuel efficiency to a total number of the comparisons.

BRIEF DESCRIPTION OF THE DRAWINGS

FIG. 1 shows a device configuration of the navigation device.
FIG. 2 is a schematic diagram illustrating the evaluation method of the fuel efficiency according to the embodiment.
FIG. 3 is one example of the display of the comparison result between the past average fuel efficiency and the present average fuel efficiency.
FIG. 4 is a schematic diagram illustrating the fuel efficiency evaluation method according to the embodiment.
FIG. 5 is a flowchart showing the control process according to the embodiment.

DETAILED DESCRIPTION OF THE PREFERRED EMBODIMENTS

According to one aspect of the present invention, there is provided a fuel efficiency display device which displays an evaluation of a fuel efficiency of a vehicle, including: a past average fuel efficiency calculating unit which calculates, based on a driving record of the vehicle, an average fuel efficiency from a start time of use of the fuel efficiency display device to a finish time of last driving operation as a past average fuel efficiency; a present average fuel efficiency calculating unit which calculates an average fuel efficiency at constant time intervals or at constant intervals of running distance as a present average fuel efficiency since a start time of present driving operation; an average fuel efficiency comparison unit which makes a comparison between the present average fuel efficiency and the past average fuel efficiency; and a display unit which displays a proportion of a number of times that the present average fuel efficiency is more efficient than the past average fuel efficiency to a total number of the comparisons.

The above fuel efficiency display device is applied to a navigation device, for example, and it includes a past average fuel efficiency calculating unit, a present average fuel efficiency calculating unit, an average fuel efficiency comparison unit, and a display unit. The past average fuel efficiency calculating unit calculates an average fuel efficiency from a start time of use of the fuel efficiency display device to a finish time of last driving operation as a past average fuel efficiency. The present average fuel efficiency calculating unit calculates an average fuel efficiency at constant time intervals or at constant intervals of running distance as a present average fuel efficiency since a start time of present driving operation. The average fuel efficiency comparison unit makes a comparison between the present average fuel efficiency and the past average fuel efficiency. The display unit displays a proportion of a number of times that the present average fuel efficiency is more efficient than the past average fuel efficiency to a total number of the comparisons between the present average fuel efficiency and the past average fuel efficiency. These units are realized by a system controller of a navigation device, for example. Thereby, the driver can know the proportion of sections where the present average fuel efficiency is more efficient than the past average fuel efficiency in the entire present driving operation.

In one mode of the fuel efficiency display device, the display unit updates the display of the proportion at predetermined time intervals. Thereby, the driver can know the proportion of sections where the present average fuel efficiency is more efficient than the past average fuel efficiency at the predetermined time intervals.

In another mode of the fuel efficiency display device, the fuel efficiency display device is connected to a navigation device guiding a route of the vehicle; wherein the present average fuel efficiency calculating unit sets the start time of the present driving operation to a start time of the route guide of the vehicle executed by the navigation device; and wherein the display unit displays the proportion at a finish time of the route guide of the vehicle executed by the navigation. Thereby, the driver can know the proportion of sections where the present average fuel efficiency is more efficient than the past average fuel efficiency at the time of the present route guide.

According to another aspect of the present invention, there is provided a fuel efficiency display method executed by a fuel efficiency display device which displays an evaluation of a fuel efficiency of a vehicle, including: a past average fuel efficiency calculating process which calculates, based on a driving record of the vehicle, an average fuel efficiency from a start time of use of the fuel efficiency display device to a finish time of last driving operation as a past average fuel efficiency; a present average fuel efficiency calculating process which calculates an average fuel efficiency at intervals of a constant time or at intervals of a constant running distance as a present average fuel efficiency since a start time of present driving operation; an average fuel efficiency comparison process which makes a comparison between the present average fuel efficiency and the past average fuel efficiency; and a display process which displays a proportion of a number of times that the present average fuel efficiency is more efficient than the past average fuel efficiency to a total number of the comparisons. By the method being executed, the driver can know the proportion of sections where the present average fuel efficiency is more efficient than the past average fuel efficiency in the entire present driving operation.

According to still another aspect of the present invention, there is provided a fuel efficiency display program executed by a fuel efficiency display device which displays an evaluation of a fuel efficiency of a vehicle, making the fuel efficiency display device function as: a past average fuel efficiency calculating unit which calculates, based on a driving record of the vehicle, an average fuel efficiency from a start time of use of the fuel efficiency display device to a finish time of last driving operation as a past average fuel efficiency; a present average fuel efficiency calculating unit which calculates an average fuel efficiency at intervals of a constant time or at intervals of a constant running distance as a present average fuel efficiency since a start time of present driving operation; an average fuel efficiency comparison unit which makes a comparison between the present average fuel efficiency and the past average fuel efficiency; and a display unit which displays a proportion of a number of times that the present average fuel efficiency is more efficient than the past average fuel efficiency to a total number of the comparisons. By the program being executed, the driver can know the proportion of sections where the present average fuel efficiency is more efficient than the past average fuel efficiency in the entire present driving operation.

EMBODIMENT

A preferred embodiment of the present invention will be described below with reference to the attached drawings.

[Navigation Device]

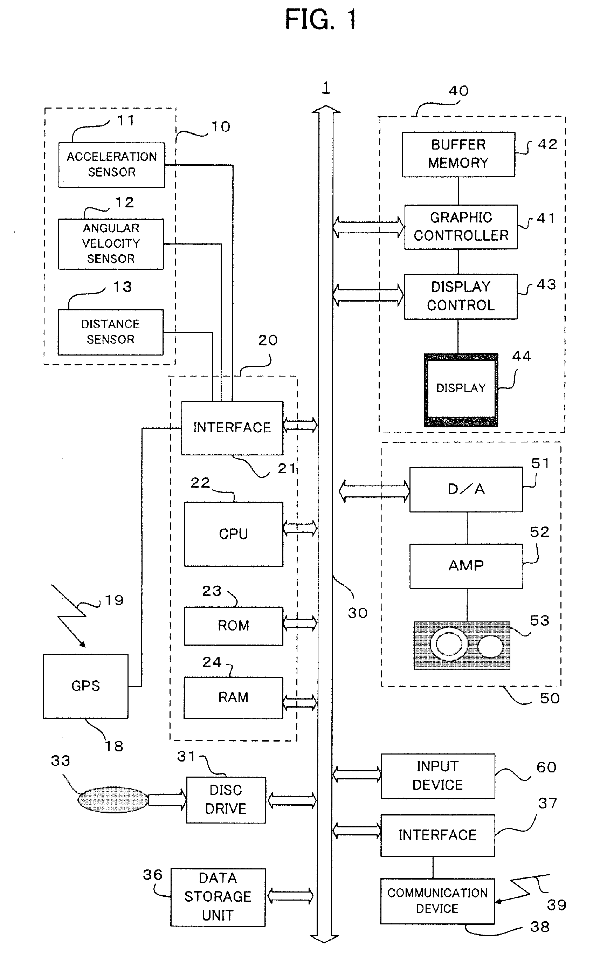

First, a description will be given of a device configuration of a navigation device 1 to which the fuel efficiency display device of the present invention is applied. FIG. 1 shows a device configuration of the navigation device 1 mounted on a vehicle.

As shown in FIG. 1, the navigation device 1 includes a stand-alone position measurement device 10, a GPS receiver 18, a system controller 20, a disc drive 31, a data storage unit 36, a communication interface 37, a communication device 38, a display unit 40, a sound output unit 50, and an input device 60.

The stand-alone position measurement device 10 includes an acceleration sensor 11, an angular velocity sensor 12 and a distance sensor 13. The acceleration sensor 11 includes a piezoelectric element, for example, and detects the acceleration degree of the vehicle and outputs the acceleration data. The angular velocity sensor 12 includes a vibration gyroscope, for example, and detects the angular velocity of the vehicle at the time of changing the direction of the vehicle and outputs the angular velocity data and the relative direction data. The distance sensor 13 measures vehicle speed pulses including a pulse signal generated with the wheel rotation of the vehicle.

The GPS receiver 18 receives an electric wave 19 for transmitting downlink data including position measurement data from plural GPS satellites, which is used for detecting the absolute position of the vehicle from longitude and latitude information.

The system controller 20 includes an interface 21, a CPU (Center Processing Unit) 22, a ROM (Read Only Memory) 23 and a RAM (Random Access Memory) 24, and is configured to control the entire navigation device 1. Concretely, according to a destination set by the driver, the system controller 20 executes the route guide of the vehicle by displaying a guided route to the destination on map data and displaying the present location of the vehicle. Based on detection signals supplied from each sensor of the stand-alone position measurement device 10, the system controller 20 also recognizes running conditions per unit time such as the acceleration of the vehicle, the vehicle speed and the running distance to store these running conditions in the data storage unit 36 as a driving record corresponding to the time thereof.

The interface 21 executes the interface operation with the acceleration sensor 11, the angular velocity sensor 12, the distance sensor 13 and the GPS receiver 18. Then, the interface 21 inputs the vehicle speed pulse, the acceleration data, the relative direction data, the angular velocity data, the GPS measurement data and the absolute direction data into the system controller 20. The CPU 22 controls the entire system controller 20. The ROM 23 includes a non-volatile memory (not shown) in which a control program for controlling the system controller 20 is stored. The RAM 24 readably stores various kinds of data such as route data preset by the user via the input device 60, and supplies a working area to the CPU 22.

The system controller 20, the disc drive 31 such as a CD-ROM drive or a DVD-ROM drive, the data storage unit 36, the communication interface 37, the display unit 40, the sound output unit 50 and the input device 60 are connected to each other via a bus line 30.

Under the control of the system controller 20, the disc drive 31 reads contents data such as sound data and video data from a disc 33 such as a CD and a DVD to output the contents data. The disc drive 31 may be the CD-ROM drive or the DVD-ROM drive, or may be a drive compatible between the CD and the DVD.

The data storage unit 36 includes HDD, for example, and stores various kinds of data used for a navigation process such as map data.

The communication device 38 includes an FM tuner or a beacon receiver, for example, and obtains the information delivered from a VICS (Vehicle Information Communication System) center.

The display unit 40 displays various kinds of display data on a display screen of a display 44 under the control of the system controller 20. Concretely, in case of displaying the map data on the display screen as the display data, the system controller 20 reads the map data from the data storage unit 36, and the display unit 40 displays, on its display screen, the map data read from the data storage unit 36 by the system controller 20. The display unit 40 includes a graphic controller 41 for controlling the entire display unit 40 on the basis of the control data transmitted from the CPU 22 via the bus line 30, a buffer memory 42 having a memory such as a VRAM (Video RAM) for temporarily storing immediately displayable image information, a display control unit 43 for controlling a display 44 such as a liquid crystal and a CRT (Cathode Ray Tube) on the basis of the image data outputted from the graphic controller 41, and the display 44. The display 44 is formed by a liquid crystal display device of the opposite angle 5-10 inches, and is mounted in the vicinity of a front panel of the vehicle.

The sound output unit 50 includes a D/A converter 51 for executing D/A (Digital to Analog) conversion of the sound digital data transmitted from the CD-ROM drive 31, a DVD-ROM 32 or the RAM 24 via the bus line 30 under the control of the system controller 20, an amplifier (AMP) 52 for amplifying a sound analog signal outputted from the D/A converter 51, and a speaker 53 for converting the amplified sound analog signal into the sound and outputting it to the vehicle compartment.

The input device 60 includes keys, switches, buttons, a remote controller and a sound input device, which are used for inputting various kinds of commands and data. The input device 60 is arranged in the vicinity of the display 44 and a front panel of a main body of an on-vehicle electric system loaded on the vehicle. Additionally, in such a case that the display 44 is in a touch panel system, a touch panel provided on the display screen of the display 44 functions as the input device 60, too.

[Evaluation Method of Fuel efficiency]

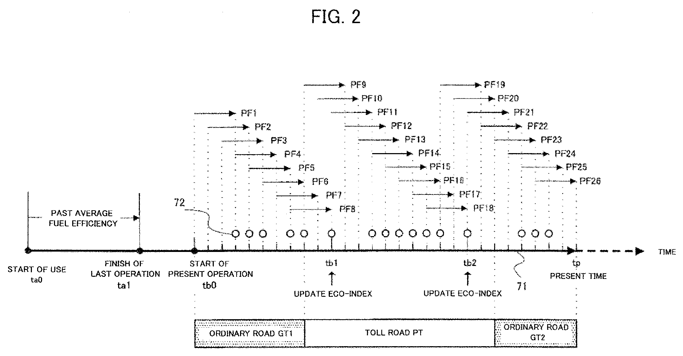

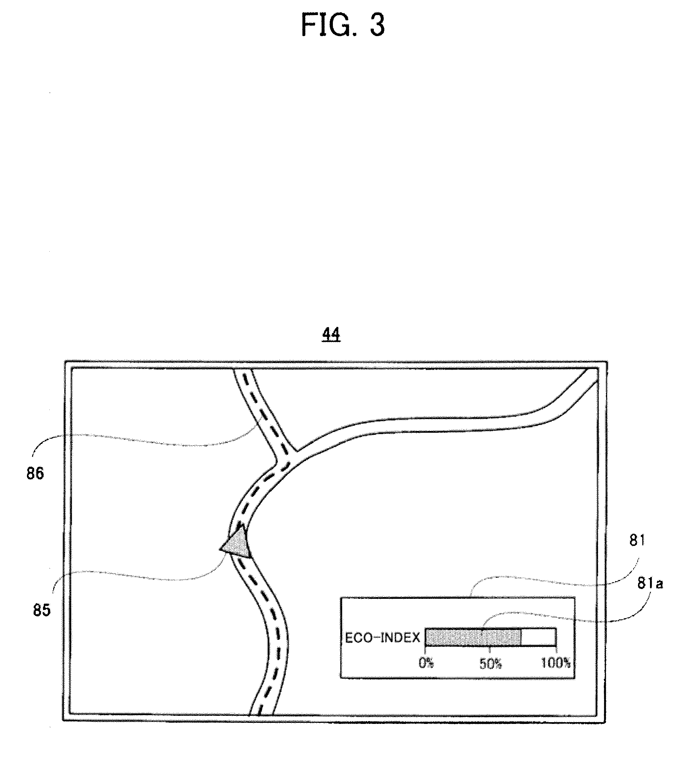

Next, the evaluation method of the fuel efficiency according to the embodiment will be described below with reference to FIGS. 2 and 3.

In the evaluation method of the fuel efficiency according to the embodiment, there are calculated a past average fuel efficiency which is an average fuel efficiency before the start of the present driving operation and a present average fuel efficiency which is an average fuel efficiency per constant period at the time of the present driving operation. Then, comparisons between each of the present average fuel efficiencies per constant period and the past average fuel efficiency are made, and the number of times that the present average fuel efficiency is greater than the past average fuel efficiency is calculated as a proportion to the total number of the comparisons. It is noted that the system controller 20 executes a program thereby to achieve the above-mentioned control. A detailed description will be given of the evaluation method of the fuel efficiency according to the embodiment with reference to FIG. 2.

FIG. 2 is a schematic diagram illustrating the evaluation method of the fuel efficiency according to the embodiment.

First, a method of calculating the past average fuel efficiency will be described below. The system controller 20 calculates the past average fuel efficiency based on the driving records before the start of the present driving operation. In FIG. 2, the past average fuel efficiency is an average fuel efficiency from the time of the first power activation since the navigation device was mounted on the vehicle, i.e., the first power activation time ta0 at the start time of use of the navigation device 1 to the finish time ta1 of the last driving operation. The finish time ta1 of the last driving operation is a finish time of the route guide of the vehicle at the time of the last driving operation, for example. Here, the system controller 20 calculates the past average fuel efficiency with respect to each road type. For example, the system controller 20 calculates the past average fuel efficiency at the time when the vehicle ran on toll roads, and the past average fuel efficiency at the time when the vehicle ran on ordinary roads. Hereinafter, the past average fuel efficiency at the time when the vehicle ran on the toll roads is referred to as "past average fuel efficiency on toll roads", and the past average fuel efficiency at the time when the vehicle ran on the ordinary roads is referred to as "past average fuel efficiency on ordinary roads". If "past average fuel efficiency on ordinary roads" and "past average fuel efficiency on toll roads" are not distinguished from each other, they are simply referred to as "past average fuel efficiency".

More concretely, based on a position of the vehicle according to the driving record and a flag, which is associated with the position in the road data of the map data, showing whether or not the road is a toll road, the system controller 20 determines whether the driving record was made at the time when the vehicle was running on a toll road or on an ordinary road. Then, based on the driving records made at the time when the vehicle was running on toll roads, the system controller 20 calculates the past average fuel efficiency on toll roads, and it also calculates the past average fuel efficiency on ordinary roads based on the driving records made at the time when the vehicle was running on ordinary roads.

Here, a general method of calculating the average fuel efficiency will be elaborated.

The average fuel efficiency is calculated by use of an estimate equation of the fuel efficiency. Given that the symbol FCC stands for the average fuel efficiency, the symbol Fc stands for the fuel consumption amount, and that the symbol Ds stands for running distance, the estimate equation of the fuel efficiency is indicated by the equation (1).
$$FCC = \frac{Ds}{Fc} \qquad \cdots (1)$$

Here, given that the symbol t stands for time and that the symbol fc stands for the fuel consumption amount per unit time, the fuel consumption amount Fc is indicated by the following equation (2).
$$Fc = \sum fc \sum \Delta t = \sum \left\{ h \left( k1 + k2 \cdot v \cdot \frac{dv}{dt} + k3 \cdot g(v) \right) \right\} \Delta t \qquad \cdots (2)$$

Concretely, the fuel consumption amount Fc is a sum of the fuel consumption amounts fc per unit time with respect to each time. Given that the symbol v stands for the velocity per unit time and that the symbol dv/dt stands for the acceleration per unit time, the fuel consumption amount fc per unit time is calculated by use of the equation (3) described below. Here, the symbols h, k1, k2, and k3 stand for coefficients. These coefficients are calculated as compatible values in advance, and stored in the ROM23.
$$\begin{cases} fc = h \left( k1 + k2 \cdot v \cdot \frac{dv}{dt} + k3 \cdot g(v) \right) \\ g(v) = v^3 + a0 \cdot v^2 + a1 \cdot v \end{cases} \qquad \cdots (3)$$

$$\text{however, if } (fc < h \cdot k1), \ fc = h \cdot k1$$

Namely, the system controller 20 obtains the velocity v and the acceleration dv/dt from the driving records and substitutes the obtained velocity v and the acceleration dv/dt into the equation (3) to calculate the fuel consumption amount fc per unit time. By calculating the sum of the calculated fuel consumption amount fc per unit time with respect to each time, the system controller 20 calculates the fuel consumption amount Fc, and by dividing the running distance Ds by the calculated fuel consumption amount Fc, it calculates the average fuel efficiency FCC.
For example, when the system controller 20 calculates the past average fuel efficiency, it obtains the velocity and the acceleration per constant period from the start time ta0 of the use of the navigation device 1 to the finish time ta1 of the last driving operation by using the driving records, and substitutes them into the equation (3) to calculates the fuel consumption amount per constant period. After that, by accumulating the fuel consumption amount per constant period, the system controller 20 calculates the fuel consumption amount from the time ta0 to the time ta1 as shown in the equation (2) . Here, the system controller 20 divides the driving records from the time ta0 to the time ta1 into each road type so that it calculates the fuel consumption amount at the time when the vehicle ran on toll roads and the fuel consumption amount at the time when the vehicle ran on ordinary roads. Based on the driving records divided into each road type, the system controller 20 also calculates the running distance at the time when the vehicle ran on the toll roads, and the running distance at the time when the vehicle ran on the ordinary roads. Then, the system controller 20 calculates the past average fuel efficiency on toll roads by using the fuel consumption amount and the running distance at the time when the vehicle ran on the toll roads, and it also calculates the past average fuel efficiency on ordinary roads by using the fuel consumption amount and the running distance at the time when the vehicle ran on the ordinary roads.
Next, a concrete description will be given of the evaluation method of the present average fuel efficiency.
The system controller 20 calculates the present average fuel efficiency which is the average fuel efficiency per constant period from the start time tb0 of the present driving operation. Here, for example, the start time tb0 of the present driving operation is set to the start time of the route guide of the vehicle. Each of the symbols PF1 to PF26 shown in FIG. 2 indicates the present average fuel efficiency per constant period in a period passing from the time tb0 to the present time tp.
Here, the thick arrow 71 shown in FIG. 2 indicates the direction of the time, and it has the scale marks per thirty seconds from the time tb0. As the scale marks shows, the present average fuel efficiency is an average fuel efficiency per one and a half minutes. For example, given that the time tb0 is a base time, the average fuel efficiency in a period passing from the base time to one and a half minutes after the base time is the present average fuel efficiency PF1, the average fuel efficiency in a period elapsing from thirty seconds after the base time to two minutes after the base time is the present average fuel efficiency PF2, and the average fuel efficiency in a period passing from one minute after the base time to two and a half minutes is the present average fuel efficiency PF3. Namely, it is not until one and a half minutes have passed since the time tb0 when the present driving operation started that the present average fuel efficiency PF1 is calculated, and the present average fuel efficiency PF2 is calculated in thirty seconds after the present average fuel efficiency PF1 is calculated, and the present average fuel efficiency PF3 is calculated in thirty seconds after the present average fuel efficiency PF2 is calculated. Similarly, the present average fuel efficiencies PF4 to PF26 per one and a half minutes are calculated in order at intervals of thirty seconds.

Similarly to the method of calculating the past average fuel efficiency, the system controller 20 calculates the present average fuel efficiency based on the driving records. For example, by using the driving records generated in the period passing from the base time, which is the time tb0, to one and a half minutes after the base time, more concretely, by substituting the acceleration, the velocity, and running distance based on the driving records into the above-mentioned equations (1) to (3), the system controller 20 calculates the present average fuel efficiency PF1. The system controller 20 calculates the present average fuel efficiency PF2 based on the driving records made in the period passing from thirty seconds to one and a half minutes after the based time, and it also calculates the present average fuel efficiency PF3 based on the driving records made in the period passing from one minute to two and a half minutes after the based time. The system controller 20 similarly calculates present average fuel efficiencies PF4 to PF26 based on the driving records made per one and a half minutes.

The system controller 20 compares each present average fuel efficiency calculated as described above to the past average fuel efficiency. According to the comparison result, the system controller 20 counts the number (hereinafter referred to as "eco-index reference point") of times that the present average fuel efficiency is more efficient than the past average fuel efficiency. In the example shown in FIG. 2, the cases where the present average fuel efficiency is more efficient than the past average fuel efficiency are shown by the circles 72 existing above the thick arrow 71. It is noted the eco-index reference point at the start time tb0 of the present driving operation is set to an initial value "0".

For example, after the system controller 20 calculates the present average fuel efficiency PF1, it compares the present average fuel efficiency PF1 to the past average fuel efficiency. Concretely, because the vehicle runs on the ordinary road GT1 in the period when the driving record corresponding to the present average fuel efficiency PF1 is made, the system controller 20 compares the present average fuel efficiency PF1 to the past average fuel efficiency on ordinary roads to determine which one of the average fuel efficiencies is more efficient. In the example shown in FIG. 2, the circles 72 is shown at the positions above the thick arrow 71 corresponding to one and a half minutes after the time tb0. The above fact indicates that the present average fuel efficiency PF1 is more efficient than the past average fuel efficiency on ordinary roads according to the comparison result between the present average fuel efficiency PF1 and the past average fuel efficiency on the ordinary road. Therefore, at the moment, the system controller 20 adds "+1" to the eco-index reference point, and the eco-index reference point becomes "1".

Similarly, the system controller 20 compares each of the present average fuel efficiencies PF2 to PF8 to the past average fuel efficiency in a period passing from the time tb0 to the time tb1. Since the vehicle runs on the ordinary road in the period, the system controller 20 compares each of the present average fuel efficiencies PF2 to PF8 to the past average fuel efficiency on ordinary roads to determine which one of the average fuel efficiencies is more efficient. As the positions of the circles 72 existing above the thick arrow 71 shown in FIG. 2 indicate, the six present average fuel efficiencies PF1, PF2, PF3, PF4, PF6 and PF8 are more efficient than the past average fuel efficiency on ordinary roads. Therefore, the eco-index reference point at the time tb1 is set to "6".

Every time the comparison between the present average fuel efficiency and the past average fuel efficiency is made, the system controller 20 calculates the proportion of the eco-index reference point to the total number of the comparisons between the present average fuel efficiency and the past average fuel efficiency since the start time of the present driving operation, and sets it to the eco-index. In other words, the eco-index indicates the proportion of the number of times that the present average fuel efficiency is more efficient than the past average fuel efficiency to the total number of the comparisons between the present average fuel efficiency and the past average fuel efficiency. Here, the system controller 20 displays the eco-index on the display 44 at the time when a predetermined time (for example, five minutes) has passed since the start time of the present driving operation, and it updates the display of the eco-index every time the predetermined time has passed.

For example, at the time when the five minutes has passed since the time tb0, i.e., at the time tb1, the system controller 20 displays the proportion of the eco-index reference point to the total number of the comparisons in the period passing from the time tb0 to the tb1 on the display 44 as the eco-index. Since the comparisons between each of the present average fuel efficiencies PF1 to PF8 and the past average fuel efficiency on ordinary road are made in the period passing from the time tb0 to the time tb1, the total number of the comparisons becomes "8". Since the eco-index reference point counted from the time tb0 to the time tb1, i.e., the number of circles 72 in FIG. 2 is "6", the eco-index at the time tb1 is calculated as 6/8=0.75 i.e., the edo-index is 75%.

FIG. 3 is an example of the display of the eco-index. In the navigation device 1, the eco-index is displayed on the display 44 in addition to the information indicating the map data and/or the present location. For example, in FIG. 3, the triangle mark 85 indicates the present location of the vehicle, and the broken line 86 indicates a route which is a guided route of the vehicle. In the example shown in FIG. 3, the eco-index is displayed on the window 81.

In the example shown in FIG. 3, the eco-index is indicated by the length of the gauge 81a. In the window 81, the numbers "0%", "50%" and "100%" shown in the window 81 herein indicate that the eco-index is 0%, 50% and 100%, respectively. At the time tb1, since the eco-index is calculated as 75%, the gauge 81a indicating the eco-index indicates the position of 75%. It is needless to say that each of the numbers "0%", "50%" and "100%" is displayed for convenience of explaining the embodiment, and that symbols indicating the approximate proportion may be displayed instead of the above-mentioned numbers.

The explanation will be continued with reference to FIG. 2 again. Similarly, in the period passing from the time tb1 to the time tb2, the system controller 20 also compares each of the present average fuel efficiencies PF9 to PF18 to the past average fuel efficiency. Since the vehicle runs on the toll road PT in the period, the system controller 20 compares each of the present average fuel efficiencies PF9 to PF18 to the past average fuel efficiency on toll roads to determine which one of the average fuel efficiencies is more efficient. As the positions of the circles 72 existing above the thick arrow 71 shown in FIG. 2 indicate, the seven present average fuel efficiencies PF11, PF12, PF13, PF14, PF15, PF16 and PF18 are more efficient than the past average fuel efficiency on toll roads. Therefore, the new eco-index reference point at the time tb2 is set to "13" which is the sum of the eco-index reference point "6" at the time tb1 and "7".

At the time tb2 when the five minutes has passed since the time tb1, the system controller 20 updates the display of the eco-index. The total number of the comparisons at the time tb2 is "18", which is the sum of the number of the comparisons "8" from the time tb0 to the time tb1 and the number of the comparisons "10" between the present average fuel efficiencies PF9 to PF18 and the past average fuel efficiency on toll roads. Therefore, the eco-index at the time tb2 is 13/18=0.72, i.e., 72%. As a result, the gauge 81a indicating the eco-index shown in FIG. 3 is updated so that it indicates 72%.

Similarly, in the period passing from the time tb2 to the present time tp, the system controller 20 also compares each of the present average fuel efficiencies PF19 to PF 26 with the past average fuel efficiency. In the period corresponding to the present average fuel efficiencies PF19 to PF22, the vehicle runs on the toll road PT, and in the period corresponding to the present average fuel efficiencies PF23 to PF26, the vehicle runs on the ordinary road GT2. Therefore, the system controller 20 compares each of the present average fuel efficiencies PF19 to PF22 to the past average fuel efficiency on toll roads, and it comperes each of the present average fuel efficiencies PF23 to PF26 to the past average fuel efficiency on the ordinary roads. As shown by the position of the circles 72 existing above the thick arrow 71 shown in FIG. 2, every one of the present average fuel efficiencies PF19 to PF22 is less efficient than the past average fuel efficiency on tall roads, but with respect to the present average fuel efficiencies PF23 to PF26, three present average fuel efficiencies PF23, PF24 and PF25 are more efficient than the past average fuel efficiency on ordinary roads. Therefore, the updated eco-index reference point is "16", which is the sum of the eco-index reference point "13" at the time tb2 and "3".

Here, the eco-index at the present time tp will be calculated. The total number of the comparisons at the present time tp is "26", which is the sum of the number "18" of the comparisons made from the time tb0 to the time tb2 and the number "8" of the comparison made between each of the present average fuel efficiencies PF19 to PF26 and the past average fuel efficiency. Therefore, the eco-index at the present time tp is 16/26=0.61, i.e., 61%.

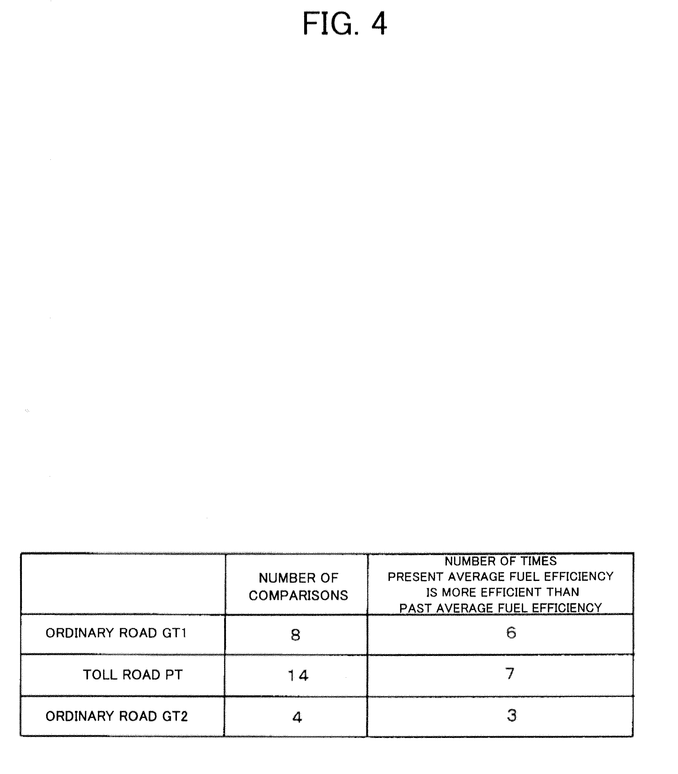

The table shown in FIG. 4 describes the number of comparisons between the present average fuel efficiency and the past average fuel efficiency and the number of times that the present average fuel efficiency is more efficient than the past average fuel efficiency with respect to each road type in the period passing from the time t0 to the present time tp. The number of comparisons made between present average fuel efficiencies PF1 to PF8 and past average fuel efficiency at the time when the vehicle runs on the ordinary road is "8", and among them, the number of times that the present average fuel efficiency is more efficient than the past average fuel efficiency is "6". The number of comparisons between present average fuel efficiencies PF9 to PF22 and the past average fuel efficiency at the time when the vehicle runs the toll road PT is "14", and among them, the number of times that the present average fuel efficiency is more efficient than the past average fuel efficiency is "7". The number of comparisons made between present average fuel efficiencies PF23 to PF26 and the past average fuel efficiency at the time when the vehicle runs on the ordinary road GT2 is "4", and among them, the number of times that the present average fuel efficiency is more efficient than the past average fuel efficiency is "3". Here, the sum of all the numbers of comparisons made between the present average fuel efficiency and the past average fuel efficiency is the total number of comparisons at the present time tp, and the sum of all the numbers of times that the present average fuel efficiency is more efficient than the past average fuel efficiency is the eco-index reference point at the present time tp. Therefore, the eco-index at the present time tp can be calculated by using the following equation (4).

$$\frac{6+7+3}{8+14+4} = 0.61$$

At the finish time of the route guide, i.e., at the time when the vehicle has just arrived at the destination, the system controller 20 also calculates the eco-index to the finish time and displays the updated eco-index on the display 44. Thereby, it becomes possible to recognize the proportion of sections where the present average fuel efficiency is more efficient than the past average fuel efficiency in the route guide at the present time. By the display of the eco-index updated at predetermined time intervals on the display 44, the driver can recognize the proportion of sections, where the present average fuel efficiency is more efficient than the past average fuel efficiency, at the predetermined time intervals.

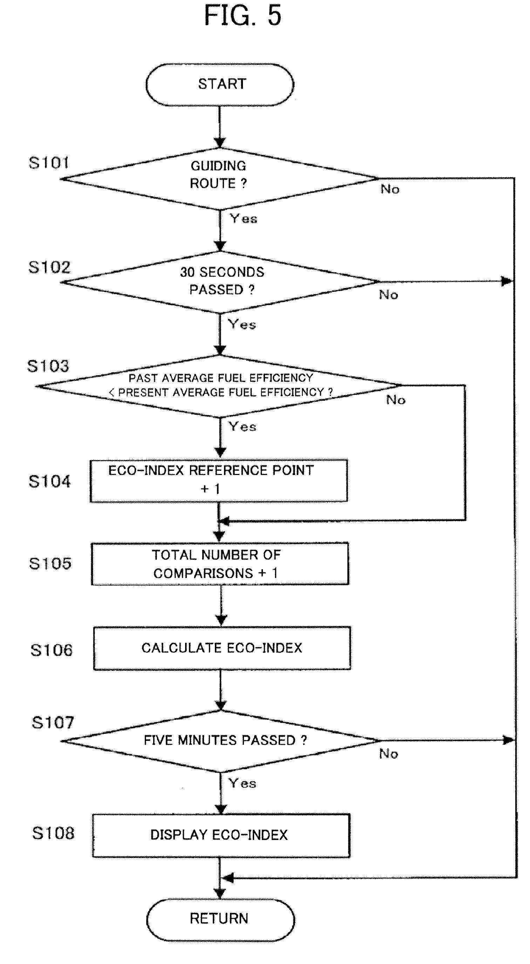

Next, a description will be given of a control process according to the above-mentioned evaluation method of the fuel efficiency with reference to flowchart shown in FIG. 5. In the control process of the fuel efficiency evaluation shown in FIG. 5, every time the present average fuel efficiency is calculated per constant period (for example, one and a half minutes), the system controller 20 calculates the eco-index by comparing it to the past average fuel efficiency. The system controller 20 also displays the updated eco-index at predetermined time intervals (for example, five minutes) since the start time of the present driving operation. The control process of the fuel efficiency evaluation shown in FIG. 5 is repeatedly executed by the system controller 20.

First, at step S101, the system controller 20 determines whether or not the route guide is being executed. When the system controller 20 determines that the route guide is being executed (step S101: Yes), it proceeds with the process at step S102. When the system controller 20 determines that the route guide is not being executed (step S101: No), it ends the control process.

At step S102, the system controller 20 determines whether or not the thirty seconds has passed since the previously executed control process of the fuel efficiency evaluation. When the system controller 20 determines that thirty seconds has passed (step S102: Yes), it proceeds with the process at step S103. Then, the system controller 20 newly calculates the present average fuel efficiency to compare it to the past average fuel efficiency. In contrast, when the system controller 20 determines that thirty seconds has not passed yet since the previously executed control process of the fuel efficiency evaluation (step S102: No), the system controller 20 ends the control process.

At step S103, when the present average fuel efficiency is more efficient than the past average fuel efficiency (step S103: Yes), the system controller 20 proceeds with the process at step S104. Then, after the system controller 20 adds "1" to the eco-index reference point, it proceeds with the process at step S105. In contrast, when the present average fuel efficiency is less efficient than the past average fuel efficiency (step S103: No), the system controller 20 proceeds with the process at step S105.

At step S105, the system controller 20 add "1" to the total number of comparisons. At next step S106, the system controller 20 calculates the eco-index by dividing the eco-index reference point by the total number of comparisons. After that, the system controller 20 proceeds with the process at step S107.

At step S107, the system controller 20 determines whether or not five minutes has passed since the time when the display was previously updated. When the system controller 20 determines that five minutes has not passed yet (step S107: No), it ends the control process. In contrast, the system controller 20 determines that five minutes has passed since the time when the display was previously updated (step S107: Yes), it proceeds with the process at step S108. Then, the system controller 20 updates the display by displaying the eco-index calculated at step S106 on the display 44. After that, the system controller 20 ends the control process.

As described above, the navigation device 1 according to the embodiment compares each of the present average fuel efficiency calculated at regular time intervals to the past average fuel efficiency at the time of the present driving operation, and it displays the number of times that the present average fuel efficiency is more efficient than the past average fuel efficiency as the proportion to the total number of comparisons on the display 44. Thereby, the driver can recognize the proportion of sections where the present average fuel efficiency is more efficient than the past average fuel efficiency to all of the present driving operation.

The present invention is not limited to the above embodiment and it can be accordingly changed in the range where the changes do not go against the gist or the ideas which can be seen in all of the claims and the specification, and the embodiment to which the above changes are applied is also included in the technical scope of the present invention. For example, in the above-mentioned embodiment, the past average fuel efficiency is calculated with respect to each road type. However, a method to which the present invention can be applied is not limited to the above-mentioned method, and it is needless to say that the past average fuel efficiency can be calculated regardless of the road types, instead. In this case, the present average fuel efficiencies are compared to the same past average fuel efficiency regardless of the road types.

In the above-mentioned embodiment, the start time of the present driving operation is set to the start time of the route guide, and the finish time of the present driving operation is set to the finish time of the route guide. However, a method to which the present invention can be applied is not limited to the above-mentioned method. Instead of this, the start time of the present driving operation may be set to the power-on time of the navigation device 1 with respect to the present driving operation, and the finish time of the present driving operation may also be set to the power-off time of the navigation device 1 with respect to the present driving operation.

In the above-mentioned embodiment, the average fuel efficiency at regular time intervals is calculated as the present average fuel efficiency, however, instead of this, the average fuel efficiency per constant running distance may be calculated. In this case, the thick arrow 71 shown in FIG. 2 indicates the distance, and if the scale marks are provided per one hundred meters, for example, the average fuel efficiency for three hundred meters is calculated per one hundred meters as the present average fuel efficiencies PF1 to PF26. In a case where the present average fuel efficiency is calculated in this way, because the fuel efficiency at the time when the vehicle is at a stop (idling) is not targeted in the calculation, the driver can recognize the proportion of the sections, where the present average fuel efficiency is more efficient than the past average fuel efficiency, to all of the present driving operation at the running time of the vehicle.

In the above-mentioned embodiment, the fuel efficiency display device of the present invention is applied to a navigation device, but what the fuel efficiency display device of the present invention can be applied to is not limited to it. Instead of this, the fuel efficiency display device may be mounted on a vehicle as a device different from a navigation device. In other words, as long as a navigation device is connected to the fuel efficiency display device, the start time of the present driving operation can be set to the start time of the route guide of the navigation device, and the finish time of the present driving operation can be set to the finish time of the route guide of the navigation device. It is noted that the above-mentioned connection between the navigation device and the fuel efficiency display device is not limited to the physical connection but also includes any wireless connection. Thereby, the driver can also recognize the proportion of sections where the present average fuel efficiency is more efficient than the past average fuel efficiency at the time of the present route guide.

INDUSTRIAL APPLICABILITY

This invention can be used for a category of a navigation device mounted on a vehicle.

BRIEF DESCRIPTION OF REFERENCE NUMBERS

**[0068]**

1      Navigation device
10    Stand-alone position measurement device
20    System controller
30    Bus line
40    Display unit

**Claims**

1.   A fuel efficiency display device which displays an evaluation of a fuel efficiency of a vehicle, comprising:

a past average fuel efficiency calculating unit which calculates, based on a driving record of the vehicle, an average fuel efficiency from a start time of use of the fuel efficiency display device to a finish time of last driving operation as a past average fuel efficiency;
a present average fuel efficiency calculating unit which calculates an average fuel efficiency at constant time intervals or at constant intervals of running distance as a present average fuel efficiency since a start time of present driving operation;
an average fuel efficiency comparison unit which makes a comparison between the present average fuel efficiency and the past average fuel efficiency; and
a display unit which displays a proportion of a number of times that the present average fuel efficiency is more efficient than the past average fuel efficiency to a total number of the comparisons.

2.   The fuel efficiency display device according to claim 1,
wherein the display unit updates the display of the proportion at predetermined time intervals.

**3.** The fuel efficiency display device according to claim 1 or 2,
wherein the fuel efficiency display device is connected to a navigation device guiding a route of the vehicle;
wherein the present average fuel efficiency calculating unit sets the start time of the present driving operation to a start time of the route guide of the vehicle executed by the navigation device; and
wherein the display unit displays the proportion at a finish time of the route guide of the vehicle executed by the navigation.

**4.** A fuel efficiency display method executed by a fuel efficiency display device which displays an evaluation of a fuel efficiency of a vehicle, comprising:

a past average fuel efficiency calculating process which calculates, based on a driving record of the vehicle, an average fuel efficiency from a start time of use of the fuel efficiency display device to a finish time of last driving operation as a past average fuel efficiency;
a present average fuel efficiency calculating process which calculates an average fuel efficiency at intervals of a constant time or at intervals of a constant running distance as a present average fuel efficiency since a start time of present driving operation;
an average fuel efficiency comparison process which makes a comparison between the present average fuel efficiency and the past average fuel efficiency; and
a display process which displays a proportion of a number of times that the present average fuel efficiency is more efficient than the past average fuel efficiency to a total number of the comparisons.

**5.** A fuel efficiency display program executed by a fuel efficiency display device which displays an evaluation of a fuel efficiency of a vehicle, making the fuel efficiency display device function as:

a past average fuel efficiency calculating unit which calculates, based on a driving record of the vehicle, an average fuel efficiency from a start time of use of the fuel efficiency display device to a finish time of last driving operation as a past average fuel efficiency;
a present average fuel efficiency calculating unit which calculates an average fuel efficiency at intervals of a constant time or at intervals of a constant running distance as a present average fuel efficiency since a start time of present driving operation;
an average fuel efficiency comparison unit which makes a comparison between the present average fuel efficiency and the past average fuel efficiency; and
a display unit which displays a proportion of a number of times that the present average fuel efficiency is more efficient than the past average fuel efficiency to a total number of the comparisons.

# FIG. 1

FIG. 2

# FIG. 3

# FIG. 4

|  | NUMBER OF COMPARISONS | NUMBER OF TIMES PRESENT AVERAGE FUEL EFFICIENCY IS MORE EFFICIENT THAN PAST AVERAGE FUEL EFFICIENCY |
|---|---|---|
| ORDINARY ROAD GT1 | 8 | 6 |
| TOLL ROAD PT | 14 | 7 |
| ORDINARY ROAD GT2 | 4 | 3 |

# FIG. 5

START

S101 — GUIDING ROUTE ?
— No
— Yes

S102 — 30 SECONDS PASSED ?
— No
— Yes

S103 — PAST AVERAGE FUEL EFFICIENCY < PRESENT AVERAGE FUEL EFFICIENCY ?
— No
— Yes

S104 — ECO-INDEX REFERENCE POINT + 1

S105 — TOTAL NUMBER OF COMPARISONS + 1

S106 — CALCULATE ECO-INDEX

S107 — FIVE MINUTES PASSED ?
— No
— Yes

S108 — DISPLAY ECO-INDEX

RETURN

### INTERNATIONAL SEARCH REPORT

| | International application No. |
|---|---|
| | PCT/JP2009/065673 |

A. CLASSIFICATION OF SUBJECT MATTER
G01F9/00(2006.01)i, B60K35/00(2006.01)i, B60R16/02(2006.01)i, G08G1/13
(2006.01)i

According to International Patent Classification (IPC) or to both national classification and IPC

B. FIELDS SEARCHED

Minimum documentation searched (classification system followed by classification symbols)
G01F9/00, B60K35/00, B60R16/02, G08G1/13

Documentation searched other than minimum documentation to the extent that such documents are included in the fields searched
    Jitsuyo Shinan Koho          1922–1996   Jitsuyo Shinan Toroku Koho   1996–2009
    Kokai Jitsuyo Shinan Koho    1971–2009   Toroku Jitsuyo Shinan Koho   1994–2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2008-64036 A (Denso Corp.), 21 March 2008 (21.03.2008), paragraphs [0051] to [0066]; fig. 6 to 12 (Family: none) | 1-5 |
| Y | JP 2009-145828 A (Fujitsu Ten Ltd.), 02 July 2009 (02.07.2009), paragraphs [0035] to [0040]; fig. 7 to 9 (Family: none) | 1-5 |
| Y | JP 2008-55963 A (Denso Corp.), 13 March 2008 (13.03.2008), paragraphs [0041] to [0061]; fig. 2 to 5 (Family: none) | 1-5 |

☒ Further documents are listed in the continuation of Box C.　　　☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    19 October, 2009 (19.10.09) | Date of mailing of the international search report<br>    27 October, 2009 (27.10.09) |
|---|---|
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/065673

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-13938 A  (Fujitsu Ten Ltd.), 22 January 2009 (22.01.2009), paragraphs [0047] to [0054]; fig. 6 (Family: none) | 3 |

Form PCT/ISA/210 (continuation of second sheet) (April 2007)

**EP 2 477 011 A1**

**REFERENCES CITED IN THE DESCRIPTION**

**Patent documents cited in the description**

- JP 2007298494 A